# EUROPEAN PATENT APPLICATION

(11) **EP 1 013 390 A1**
(43) Date of publication of application: **28.06.2000**
(21) Application number: 96930404.7
(22) Date of filing: 13.09.1996
(51) Int. Cl.: B29C 45/00, B29C 45/70

(54) **METHOD OF INJECTION MOLDING EXPANDABLE PLASTIC COMPOSITION**

(71) Applicant: CHISSO CORPORATION, Osaka-shi Osaka 530-6591 (JP)
(72) Inventor: YOSHIZAKI, Michio, Chiba 290 (JP); HONDA, Koichi, Chiba 290 (JP)
(74) Representative: HOFFMANN - EITLE
(86) International application number: JP9602639
(87) International publication number: WO9810912

(57) **Abstract**

A process for the injection molding of a foamable plastic composition which comprises the steps of injecting a molten foamable plastic composition into a cavity having a lower volume than that of a desired molded article; after the completion of injection filling, cooling the composition to the state wherein a solidified layer in contact with a mold surface mingles with a molten inside layer; enlarging the volume of the cavity to that of the desired molded article; and after further cooling, removing the molded article. This molded article comprises a layer having a non- or low-foamed, dense structure on the surface and a high-foamed layer at the inside, and has a light weight and good thermal insulating properties.

## Description

### TECHNICAL FIELD

This invention relates to a process of injection molding a foamable plastic composition. More particularly, the invention relates to an injection molding process for producing a molded plastic foam article having a light weight, good thermal insulating properties and stiffness, the surface of the molded article comprising a layer having a non- or low-foamed, dense structure and the inside of the molded article comprising a high-foamed layer.

### BACKGROUND ART

As a prior process for the manufacture of molded plastic foam articles, there is known a process wherein a thermoplastic composition containing a foaming agent is injected into a cavity having the same volume as a desired molded article in a smaller amount than the volume of the cavity and the cavity is filled with the composition by use of an increase in volume of the composition due to foaming. In this process, however, it is difficult to completely fill the cavity with the composition, when the shape of the desired molded article at the end portion is of thin section. Even when the thickness of the desired molded article is more than 4 mm, a foaming magnification is limited to 1.2 to 1.5 times. With such foaming magnification, a problem remains on thermal insulating properties and a light weight of the resultant molded plastic foam article.

As other process for the manufacture of the molded plastic foam article, Japanese Patent Kokai Sho 62-246710 discloses an injection molding process wherein a mold to be connected to the injection port of an injection molding machine consists of a stationary mold part and a movable mold part, a cavity formed therebetween can be enlarged and reduced by moving the movable mold part, and at the time of a foaming agent being injected into the mold from the injection molding machine, the cavity is enlarged to a predetermined size by making the movable mold part go backward.

Further, Japanese Patent Kokai Hei 4-214311 discloses an injection compression molding process wherein a mold relatively movable to the direction of enlarging or reducing the cavity volume is placed in the position of reducing the predetermined cavity volume, the mold is moved to the direction of enlarging the cavity volume while injecting a foamable molten resin into the cavity by maintaining the pressure of preventing the resin from foaming, the resin is compressed by moving the mold to the direction of reducing the cavity volume, the surface of the resin is cooled to solidify, the resin pressure is lowered to that of initiating the foaming by moving again the mold to the direction of enlarging the cavity volume, thereby foaming the resin within the cavity, and after cooling, a molded article is removed.

In such prior processes, however, the problem remains that the molded article of good appearance is not produced. The cause in the former process will be considered as mentioned below. Since the cavity volume is enlarged at the same time as the injection, a cell collapse occurs at the surface portion of the molded article and the surface having a non- or low-foamed, dense cell structure is not obtained. In case of using a mold having the cavity structure with a thin-wall at the position away from the gate, it is difficult to completely fill the mold. The cause in the latter process will be considered as mentioned below. In case of using the mold having the cavity structure with a thin-wall at the position away from the gate (e.g. the mold for the molded article having a large flat area, ribs and bosses) and a conventional molding machine, it is difficult to maintain the pressure of the foamable plastic so as to prevent it from foaming. If the injection is performed at a high-speed and a high-pressure using a large molding machine or a counter-pressure process is used in combination therewith, the foamable plastic can be, of course, maintained at the pressure of preventing it from foaming. However, the problem remains on economy. Further, since two steps of reducing and enlarging the cavity volume are required and labor, cost and time are further required for the determination of the volume of the cavity on reduction and enlargement, the problem remains on economy.

Further, the prior processes have the problems that in the production of the molded article having a large flat area, a thin-walled rib and wall surface or boss at the end portion, the resin cannot be completely filled to the end portion of the molded article (what is called "short shot"), which results in the occurrence of defective and no production of the molded article having a dense surface and good appearance.

The cause of the above problem will be considered as mentioned below. In either of the above prior processes, the cavity is enlarged at the same time as injection or in the middle of injection, that is, the volume of the cavity to be filled is increased in the middle of resin feeding. If said operation is conducted with the cavity having a large flat area, the case may occur where the feed rate of resin cannot follow the rate of increasing the cavity volume. In such situation, it is very difficult that the pressure within the cavity of the resin to be fed is kept constant and the resin cannot be prevented from the initiation of foaming. With the cavity having the shape as above in which the resin feed pressure of more than a predetermined value is required for the filling to the end portion, short shot is inevitable. Even if the cavity is compressed again after it was enlarged, most of the resin foaming is already completed at that time. In the step of compressing the cavity, therefore, the cell produced by foaming is only compressed and the effect of filling a fluid resin to the end portion cannot be expected.

For the same reasons as mentioned above, a reduction of resin pressure within the cavity will promote foaming in the middle of feeding the resin, so that the cell produced by foaming will rupture successively at the front portion of the feeding resin, leaving traces on the surface of the molded article, with no production of the molded article of good appearance.

To prevent the reduction of pressure as mentioned above, a counter-pressure process has been employed together wherein a compressed gas is previously sealed into a mold to keep constant the pressure at the front portion of the fluid resin. Even in such a case, there is a phenomenon that a resin flow apparently stops or goes backward at the flat area of the cavity in connection with the feed rate of the resin and the speed of enlarging the cavity volume, so that the trace or mark appears on the surface of the molded article, leading to poor appearance of said article.

To remove such drawbacks of prior art processes, there is no other way but to limit the shape of the molded article to bar, column or the form having sufficient thickness to the thickness direction relative to the projection area of the flat portion. That is, the production of a good molded article by the processes comprising the step of enlarging the cavity at the same time as injection or in the middle of injection is under the restraint that the shape of the molded article is restricted to the narrow range.

Thus, the present invention is devised in view of such drawbacks of the prior art and the object of the invention is to provide an economical injection molding process of producing a molded plastic foam article having a light weight, good thermal insulating properties and stiffness, the surface of the molded article comprising a layer having a non- or low-foamed, dense structure and the inside of the molded article comprising a high-foamed layer, by means of conventional injection molding machine using a mold having the cavity structure with a thin-wall at the position away from the gate.

### DISCLOSURE OF INVENTION

The invention relates to a process of injection molding a foamable plastic composition which comprises the steps of:
a) injecting a molten foamable plastic composition into a cavity having a volume of 10-95% based on that of a desired molded article;
b) after the completion of injection filling, cooling the composition to the state wherein a solidified layer in contact with a mold surface mingles with a molten inside layer;
c) enlarging the volume of the cavity to that of the desired molded article; and
d) after further cooling, removing the molded article.

The invention also relates to the molded plastic foam article produced by the above process.

### BRIEF DESCRIPTION OF DRAWINGS

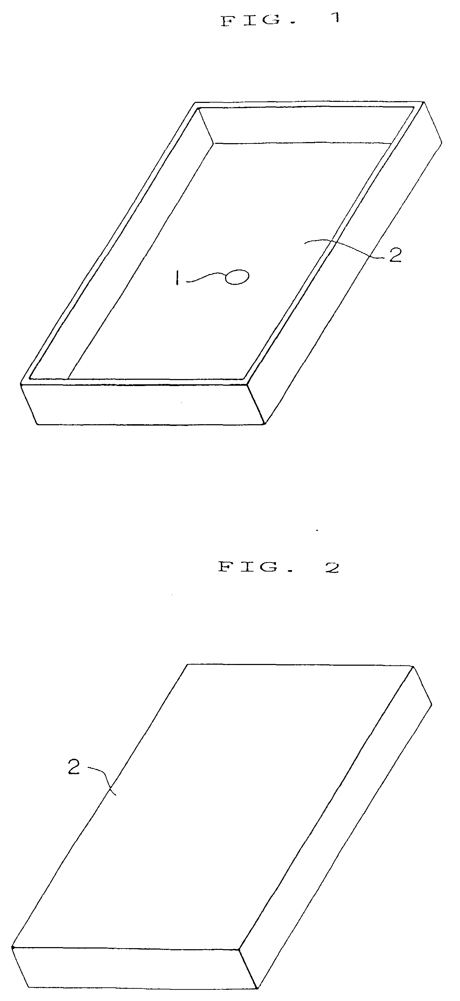

Fig. 1 is a perspective view showing the inside of the molded article produced in the Examples of the present invention. Fig. 2 is a perspective view showing the bottom of the molded article produced in the Examples of the present invention. In the drawings, the position of a gate is indicated at 1, and a top portion of the molded article as well as the portion from which a specimen used for the test of stiffness and thermal insulating properties is cut off is indicated at 2.

### BEST MODE DESCRIPTION OF INVENTION

The foamable plastic composition used in the invention comprises thermoplastics and a foaming agent. The thermoplastics include polypropylene, polyethylene, propylene/ethylene copolymer, polystyrene, polyvinyl chloride, polyvinylidene chloride, ABS resin, methacrylate resin, polyvinyl alcohol or the like. The foaming agents include an inorganic compound such as ammonium carbonate and sodium bicarbonate, and an organic compound such as azo compounds, sulfohydrazide compounds, nitroso compounds and azide compounds or the like. The azo compounds include azodicarbonamide (ADCA), 2,2'-azobisisobutyronitrile, azohexahydrobenzonitrile, diazoaminobenzene and the like. The sulfohydrazide compounds include benzene sulfonyl hydrazide, benzene-1,3-disulfonyl hydrazide, diphenylsulfone-3,3'-disulfonyl hydrazide, diphenyl oxide-4,4'-disulfonyl hydrazide and the like. The nitroso compounds include N,N'-dinitrosopentamethylenetetramine (DNPT), N,N'-dimethyl terephthalate and the like. The azide compounds include terephthalazide, p-tert.butyl-benzazide and the like.

The foamable plastic composition used in the invention can be prepared, for example, by dry blending thermoplastics and 0.5-5% by weight of a foaming agent based on the weight of the thermoplastics using a tumbler or the like.

The cavity having a volume of 10-95% based on that of a desired molded article as specified in the present invention can be expressed, for example, in terms of the volume obtained by dividing the volume of the desired molded article by the foaming magnification of the desired molded article. For instance, if the dimensions of the desired molded article are 200 mm × 200 mm × 4 mm and the foaming magnification is 2 times, the cavity having a volume of 50% based on that of the desired molded article can be expressed as 200 mm × 200 mm × 2 mm.

The cavity having the volume of less than 10% is not preferable, since the use of such cavity provides increased gradient of the pressure applied to the foamable plastic composition on filling, so that uniform filling cannot be achieved with no production of the molded plastic foam article with good appearance. The cavity having the volume of more than 95% is not preferable, since the use of such cavity temporarily reduces the pressure applied to the foamable plastic composition on injection, so that foaming begins before the completion of filling, with no production of the molded plastic foam article with good appearance.

The enlargement of the cavity volume can be accomplished, for instance, by the movement of the mold by a clamping mechanism of the mold injection machine or the movement of a slide core mounted on the mold. This change of the cavity volume can be manually operated, but it can be desirably controlled by the mechanism itself of the molding machine or mold. If the enlargement of the cavity volume is carried out by the movement of the mold by the clamping mechanism of the injection molding machine, it is preferable that the injection molding machine has such a controlling mechanism that the mold can be arbitrarily moved or ceased during the operation of molding. If the enlargement of the cavity volume is carried out by the movement of the slide core, it is preferable that the injection molding machine has the mechanism that can control arbitrarily the movement of the slide core.

In the process of the present invention, cooling the contents of the cavity to the state wherein the solidified layer in contact with the mold surface mingles with the molten inside layer can be carried out, for instance, by maintaining the state of the cavity having the volume of 10-95% based on that of the desired molded article for 1 to 20 seconds after the completion of injection filling, using the cooling mechanism for the injection mold.

The foamable plastic composition used in the invention may be compounded, if necessary, with antioxidants, weatherproof agents, ultraviolet absorbers, antistatic agents, coloring agents, olefin elastomers and inorganic fillers such as talc, to such an extent as not to impair the object of the invention.

The process of the present invention is characterized in that the cavity is at the reduced position in the course of injecting the foamable plastic composition into the cavity, which means that the volume of the cavity must not be changed by contraction or expansion of the cavity during the injection, and that the operation of cooling/expansion of cavity/re-cooling is carried out after the completion of injection. Thus, the molded articles produced by this process provide those having good appearance and thermal insulating properties, etc., in which the surface comprises a layer having a non- or low-foamed, dense structure and the inside comprises a high-foamed layer.

The causes of producing the layer having the non- or low-foamed, dense structure on the surface of the molded article will be presumed as explained below. Since the volume of the cavity remains at 10-95% based on that of the desired molded article until the step b) of the process, i.e., the cavity is at the reduced position with no increase in the cavity volume, the injection pressure and injection dwell will be transmitted to the end portion of the molten foamable plastics which has been filled by injection to the cavity. The molten foamable plastics at this state will be at non- or low-foamed state. Then, the plastics in such a state are subjected to the step of cooling them to the state wherein the solidified layer in contact with the mold surface mingles with the molten inside layer, upon which the molten foamable plastics in contact with the mold are cooled in a non- or low-foamed state as they are, and they transfer the surface of the mold. Thereafter, no foaming will occur even if the cavity volume is increased. As a result, there will be produced a molded article wherein the surface has the layer of the non- or low-foamed, dense structure, i.e., the article having good appearance. In view of the above-mentioned fact that the injection pressure and injection dwell will be transmitted to the end portion of the molten foamable plastics which were filled by injection to the cavity, it is possible to fill the molten foamable plastics to the thin-wall part, with the ease of complete filling, even when there is employed the mold having the cavity structure with a thin-wall at the position away from the gate. Of course, the cooling step is accomplished until the state wherein the solidified layer in contact with the mold surface mingles with the molten inside layer, so that foaming of the molten inside layer occurs in the subsequent step c) of the process. In further step d), the molten layer is cooled to solidify the inside, which results in the production of the molded article wherein the inside comprises the high-foamed layer.

The invention is further illustrated by the following examples and comparative examples in which the following compositions, injection molding machine and mold are used.

### Composition

Composition A: This composition was prepared by mixing 97 parts by weight of a crystalline propylene homopolymer having a melt flow rate of 2.5 g/10 minutes based on test condition 14 of JIS K 7210 (230°C, 21.18N) and a melting point of 165°C with 3 parts by weight of azodicarbonamide (ADCA) under agitation using a tumbling mixer.
Composition B: This composition was prepared by mixing 97 parts by weight of a crystalline propylene/ethylene block copolymer comprising 85% by weight of a propylene homopolymer and 15% by weight of propylene/ethylene copolymer having the ethylene content of 60% by weight, the crystalline propylene having a melt flow rate of 2.5 g/10 minutes based on test condition 14 of JIS K 7210 (230°C, 21.18N) and a melting point of 165°C, with 3 parts by weight of azodicarbonamide (ADCA) under agitation using a tumbling mixer.
Composition C: This composition was prepared by mixing 97 parts by weight of a crystalline propylene homopolymer having a melt flow rate of 2.5 g/10 minutes based on test condition 14 of JIS K 7210 (230°C, 21.18N) and a melting point of 165°C with 2 parts by weight of azodicarbonamide (ADCA) and 1 part by weight of ammonium carbonate under agitation using a tumbling mixer.

### Injection Molding Machine

There was used an injection molding machine provided with a cylinder of 90 mm screw diameter and a mold clamping mechanism with a maximum mold clamping force of 650T.

### Mold

There was used a mold having a cavity for the production of a box molded article having the size of 410 mm in length, 295 mm in width and 50 mm in height as shown in Fig. 1, in which a parting part of the mold is of a fitting type and the volume of the cavity is changeable at the moving location of the mold.

The characteristics shown in the following examples and comparative examples were evaluated by the following methods. The portion where a specimen was cut from the molded article is indicated at 2 in Figs. 1 and 2.

### Filling Evaluation

The molded articles obtained in the examples and comparative examples were compared with the following standard article to evaluate the configuration of the end portion in which "short shot" occurs. In case where the configuration is identical with that of the standard article, it is expressed as "G". In case where the configuration is different from that of the standard article, it is expressed as "N".
Standard Article: This article was produced by using polypropylene having a melt flow rate of 2.5 g/10 minutes based on test condition 14 of JIS K 7210 (230°C, 21.18N), the molding machine and mold used in the examples in the following manner. The cylinder temperature of the injection molding machine was set at 210°C, and the coolant temperature of the mold was set at 50°C. 702 g of said polypropylene was injected into the cavity having the thickness at the top portion of 5.0 mm and the total volume of 780 cc. After completion of injection, the cavity was cooled for 50 seconds and the mold was opened to remove a molded article. This molded article was used as the standard article.

### Appearance

The molded articles obtained in the examples and comparative examples were compared with the above standard article to evaluate the surface profile. In case where the surface profile is identical with that of the standard article, it is expressed as "G". In case where the surface profile is apparently different from that of the standard article and unevenness was observed on the surface, it is expressed as "N".

### Foaming Magnification

Each 100 mm × 100 mm specimen was cut from the molded articles obtained in the examples and comparative examples, and then measured for the specific gravity. The foaming magnification was expressed in terms of the value obtained by dividing the measured specific gravity by the specific gravity of the standard article.

### Thermal Insulating Properties

Each 100 mm × 100 mm specimen was cut from the molded article obtained in the examples and comparative examples and a thermal conductivity was measured in accordance with ASTM D2320 (probe method), which was served as an indication of the thermal insulating properties (unit: kcal/m·Hr·°C). Lower thermal conductivity shows better thermal insulating properties.

### Stiffness

Each 15 mm × 119 mm specimen was cut from the molded article obtained in the examples and comparative examples, and a flexural test was carried out in accordance with JIS K7203. As a test result, a maximum flexural load was recorded, which was served as an indication of the stiffness.

### Example 1

The molding was performed using composition A, the injection molding machine and mold as mentioned above and further setting the cylinder temperature of the molding machine at 230°C and the coolant temperature of the mold at 70°C, by the following procedure.
(i) 396 g of the composition were injected into a cavity having the volume of 440 cc and the thickness of 2.2 mm between the cavities (the distance between the stationary mold and the movable mold) in contact with the top portion of the molded article (as indicated at 2 in Figs. 1 and 2), which is abbreviated hereafter as "the thickness at the top portion". The injection was completed after 3 seconds.
(ii) After completion of injection filling, cooling was continued for 10 seconds and subsequently an enlargement of the cavity volume was initiated. The enlargement was completed 1.5 second after the initiation so that the thickness at the top portion became 5.0 mm and the total volume became 780 cc.
(iii) After the enlargement of the cavity volume was completed, cooling was continued for 100 seconds, the mold was opened to remove a molded article having the size of 410 mm in length × 295 mm in width × 52.8 mm in height and the volume of 780 cc. The characteristics of the molded article are shown in Table 1.

### Example 2

The molding was performed using composition A, the injection molding machine and mold as mentioned above and further setting the cylinder temperature of the molding machine at 230°C and the coolant temperature of the mold at 70°C, by a similar procedure as in Example 1 except for the following step (ii).
(ii) After completion of injection filling, cooling was continued for 15 seconds and subsequently an enlargement of the cavity volume was initiated. The enlargement was completed 1.5 second after the initiation so that the thickness at the top portion became 5.0 mm and the total volume became 780 cc.

There was obtained a molded article having the size of 410 mm in length × 295 mm in width × 52.8 mm in height and the volume of 780 cc. The characteristics of the molded article are shown in Table 1.

### Example 3

The molding was performed using composition A, the injection molding machine and mold as mentioned above and further setting the cylinder temperature of the molding machine at 230°C and the coolant temperature of the mold at 70°C, by a similar procedure as in Example 1 except for the following step (i).
(i) 342 g of the composition were injected into a cavity having the total volume of 380 cc and the thickness of 1.7 mm at the top portion and the injection was completed after 3 seconds. There was obtained a molded article having the size of 410 mm in length × 295 mm in width × 52.8 mm in height and the volume of 780 cc. The characteristics of the molded article are shown in Table 1.

### Example 4

The molding was performed using composition B, the injection molding machine and mold as mentioned above and further setting the cylinder temperature of the molding machine at 230°C and the coolant temperature of the mold at 70°C, by a similar procedure as in steps (i)-(iii) of Example 1. There was obtained a molded article having the size of 410 mm in length × 295 mm in width × 52.8 mm in height and the volume of 780 cc. The characteristics of the molded article are shown in Table 1.

### Example 5

The molding was performed using composition C, the injection molding machine and mold as mentioned above and further setting the cylinder temperature of the molding machine at 230°C and the coolant temperature of the mold at 70°C, by a similar procedure as in steps (i)-(iii) of Example 1. There was obtained a molded article having the size of 410 mm in length × 295 mm in width × 52.8 mm in height and the volume of 780 cc. The characteristics of the molded article are shown in Table 1.

### Comparative Example 1

The molding was performed using composition A, the injection molding machine and mold as mentioned above and further setting the cylinder temperature of the molding machine at 230°C and the coolant temperature of the mold at 70°C, by the following procedure.

396 g of the composition were injected into a cavity having the total volume of 780 cc and the thickness of 5.0 mm at the top portion and the injection was completed after 3 seconds. After completion of injection, cooling was continued for 120 seconds and the mold was opened to remove a molded article having the size of 410 mm in length × 295 mm in width × 51.3 mm in height and the volume of 665 cc. The characteristics of the molded article are shown in Table 1.

### Comparative Example 2

The molding was performed using composition A, the injection molding machine and mold as mentioned above and further setting the cylinder temperature of the molding machine at 230°C and the coolant temperature of the mold at 70°C, by the following procedure.
(i) 396 g of the composition were injected into a cavity having the volume of 440 cc and the thickness of 2.2 mm at the top portion and the injection was completed after 3 seconds.
(ii) Two seconds after the initiation of injection, an enlargement of the cavity volume was initiated and the enlargement was completed 1.5 second after the initiation so that the cavity thickness at the top portion became 5.0 mm and the total volume became 780 cc.
(iii) After the enlargement of the cavity volume was completed, cooling was continued for 100 seconds and the mold was opened to remove a molded article having the size of 410 mm in length × 295 mm in width × 52 mm in height and the volume of 720 cc. The characteristics of the molded article are shown in Table 1.

### Comparative Example 3

The molding was performed using composition A, the injection molding machine and mold as mentioned above and further setting the cylinder temperature of the molding machine at 230°C and the coolant temperature of the mold at 70°C, by the following procedure.
(i) 396 g of the composition were injected into a cavity having the volume of 440 cc and the thickness of 2.2 mm at the top portion and the injection was completed after 3 seconds.
(ii) At the same time as the initiation of injection, an enlargement of the cavity volume was initiated and the enlargement was completed 1.5 second after the initiation so that the thickness at the top portion became 5.0 mm and the total volume became 780 cc.
(iii) After completion of the enlargement, cooling was continued for 100 seconds and the mold was opened to remove a molded article having the size of 410 mm in length × 295 mm in width × 52 mm in height and the volume of 700 cc. The characteristics of the molded article are shown in Table 1.

**Table 1**

| | Filling evaluation | Foaming magnification | Thermal insulating properties | Stiffness | Appearance |
|---|---|---|---|---|---|
| Example 1 | G | 2.3 | 0.09 | 208 | G |
| 2 | G | 2.3 | 0.09 | 216 | G |
| 3 | G | 2.9 | 0.07 | 170 | G |
| 4 | G | 2.3 | 0.06 | 170 | G |
| 5 | G | 2.3 | 0.09 | 208 | G |
| Comparative Example 1 | N | 1.5 | 0.15 | 165 | N |
| 2 | N | 2.0 | 0.11 | 170 | N |
| 3 | N | 1.6 | 0.14 | 160 | N |

As shown in Table 1, the molded articles produced in Examples 1, 2, 3, 4 and 5 were excellent in all respects of filling evaluation, foaming magnification, thermal insulating properties, stiffness and appearance. On the other hand, the molded articles produced in Comparative Examples 1, 2 and 3 are inferior in all respects of filling evaluation, foaming magnification, thermal insulating properties, stiffness and appearance. Thus, the injection molding processes used in Comparative Examples 1, 2 and 3 are not suitable for the present invention.

### INDUSTRIAL APPLICABILITY

The injection molding process according to the present invention can be economically performed in a conventional injection molding machine using a mold having the cavity structure with a thin-wall at the position away from the gate. The molded plastic foam articles produced by such a process comprise a layer having a non- or low-foamed, dense structure on the surface and a high-foamed layer at the inside, and have a light weight, good thermal insulating properties and good stiffness, thus being suitable for use as automobile parts, household appliances, industrial parts or the like.

## Claims

1. A process for the injection molding of a foamable plastic composition which comprises the steps of:
a) injecting a molten foamable plastic composition into a cavity having a volume of 10-95% based on that of a desired molded article;
b) after the completion of injection filling, cooling the composition to the state wherein a solidified layer in contact with a mold surface mingles with a molten inside layer;
c) enlarging the volume of the cavity to that of the desired molded article; and
d) after further cooling, removing the molded article.

2. The process of Claim 1 wherein the foamable plastic composition comprises thermoplastics and a foaming agent.

3. The process of Claim 2 wherein the foamable plastic composition further comprises antioxidants, weatherproof agents, ultraviolet absorbers, antistatic agents, coloring agents, olefin elastomers, inorganic fillers and the like.

4. The process of Claim 2 wherein 0.5-5% by weight of a foaming agent is incorporated based on the weight of the thermoplastics.

5. A molded plastic foam article produced by a process claimed in any one of Claims 1-4.
